# EUROPEAN PATENT SPECIFICATION

(11) **EP 4 198 480 B1**
(45) Date of publication and mention of the grant of the patent: **26.02.2025**
(21) Application number: 21400025.9
(22) Date of filing: 16.12.2021
(51) Int. Cl.: G01M 11/02, B23K 26/06, B23K 26/342, B23K 26/70, G01N 21/958, H01S 3/00, H01S 3/13

(54) **AN OPTICAL INTEGRITY MONITORING APPARATUS FOR AN OPTICAL SYSTEM**
OPTISCHES INTEGRITÄTSÜBERWACHUNGSGERÄT FÜR EIN OPTISCHES SYSTEM
APPAREIL DE SURVEILLANCE D'INTÉGRITÉ OPTIQUE POUR UN SYSTÈME OPTIQUE

(43) Date of publication of application: 21.06.2023
(73) Proprietor: AIRBUS HELICOPTERS DEUTSCHLAND GmbH, 86609 Donauwörth (DE); Airbus Helicopters, 13725 Marignane Cedex (FR)
(72) Inventor: Desmet, Lieven, D-86153 AUGSBURG (DE); Noetzel, Paul, D-86152 AUGSBURG (DE)
(74) Representative: GPI Brevets

(56) References cited:
- EP-A1- 3 553 489
- DE-B4- 10 113 518
- US-A1- 2007 149 858
- US-A1- 2011 084 609
- US-A1- 2019 165 543
- US-B2- 9 116 131

## Description

The present technology relates to an optical system for generating an optical beam, and, more particularly, to an optical system with a laser and an optical assembly, whereby the optical system is adapted for monitoring its optical integrity and for initializing safety procedures to avoid hazardous situations when detecting defects in the optical system.

Generally, an optical system with a high-power laser source will in many cases be coupled to an optical element at the optical exit of the system, to transform the highly collimated laser beam into an optical beam that is suitable for the intended end application.

The transport of the optical power from the laser to the optical assembly can be in free space and/or in a waveguide such as an optical fiber. Often, additional optical components are arranged between the laser and the optical assembly. Such additional optical components may include optical filters, polarizers, mirrors, cube splitters, etc.

The occurrence of fault conditions in such an optical system may cause the optical system to become unsafe outside a predetermined Nominal Ocular Hazard Distance (NOHD).

Fault conditions are any failures that compromise the nominal function of the optical system. These fault conditions may include the loss or displacement from the nominal position of any laser, monitor detectors or any other optical component in the beam path between the laser and the optical system exit plane, the change of optical function of any optical component or waveguide, for example due to thermal/vibration cracking or excessive light absorption by material characteristics changes, the change in free space characteristics at any location in the optical system, for example the excessive presence of absorbing dust particles or smoke gases in the optical beam path, just to name a few.

Therefore, the integrity of all optical components in the beam path between the laser and the optical system exit plane need to be safeguarded.

Furthermore, in industrial applications such as high-power laser material processing, the output power of the laser often needs stabilization to maintain optimal process parameters. Therefore, an optical feedback from an air-material back reflection from an optical component in the beam path is used to track variations in output laser power and fed into an opto-electronic detector to regulate the laser driver electronics to keep the optical power of the laser constant.

Documents DE 19507401 C2, US 2013/0258321 A1, DE 10113518 B4, US 2019/0160599 A1, and DE 10108955 C2 use the principle of the optical feedback for the purpose of monitoring a potential surface contamination of the exit plane of an optical element in the optical system; or for monitoring the temperature of a specific optical component. The monitoring light may be coming from the main laser source itself or from a secondary light source.

In some 3D printing technologies, a laser induced physical process that leads to a thermal effect at the surface of the printing material may lead to some light being emitted from the surface of the printing material. This emitted light from the material (e.g., from the glowing plasma in a laser welding process) is captured by the optical system and diverted to a monitoring detector in order to examine in real-time the external laser induced physical process.

Document US 2006/0043077 A1 describes a CO₂ laser machining head with machining optics comprising at least one lens, through which a CO₂ laser beam is directed to a workpiece, and a monitoring device for monitoring defects and contamination in the machining optics, comprising a plurality of light emitting diodes and photodiodes which are directed to an optically active surface of the machining optics so as to be distributed around the CO₂ laser beam in order to determine defects and contamination of the optically active surfaces of the machining optics by detecting reflected components and stray components of the radiation of the light emitting diodes.

Documents US 2009/0007675 A1 and EP 1 354 664 B1 both describe monitoring an optical element for the purpose of maintaining a certain quality of the laser beam in applications such as thermal welding or cutting. In other words, the described apparatuses track whether the operating conditions for an optical element change due to temperature changes or due to deposits or damages to the optic surface to avoid a deterioration of the quality of the laser beam. Thus, these inventions monitor an optical element for guaranteeing that a high-power laser beam that is suitable for laser cutting or thermal welding applications exits the optical system. Furthermore, document US 2009/0007675 A1 describes using ultrasonic waves for this purpose, while document EP 1 354 664 B1 describes using a reflection in the area of the optical surface of the optical element that faces a workpiece. The documents US2011084609, US2019165543 and US2007149858 were cited.

Based on the limitations and drawbacks of the prior art, an objective is to provide an optical system for remote laser lighting applications that generate an optical beam from a laser beam. The optical system should include a monitoring system that monitors the optical integrity of the optical system for any foreseeable fault condition without relying on the use of electrical power for electronic monitoring. The monitoring system should be cost effective and require little or no maintenance.

This objective is solved by an optical system comprising the features of claim 1.

More specifically, an optical system for generating an optical beam comprises an optical system exit plane through which the optical beam exits the optical system, a laser that emits a laser beam, at least one optical element, an optical source, and a light detector. The at least one optical element is arranged at least partly between the laser and the optical system exit plane and forms the optical beam from the laser beam. The at least one optical element comprises an entrance surface for receiving the laser beam. The optical source is arranged between the entrance surface of the at least one optical element and the optical system exit plane. The optical source generates light within a predetermined wavelength range in response to being excited by at least a part of the laser beam. The light detector is coupled to the laser and adapted for receiving at least a portion of the light from the optical source. The light detector has a predetermined wavelength sensitivity range that overlaps at least partly with the predetermined wavelength range. The light detector controls the laser if the light detector fails to receive the at least a portion of the light from the optical source or detects that an intensity of the at least a portion of the light received from the optical source is outside a predetermined intensity range.

For example, the light detector may shut off the laser or direct the laser to reduce a laser output radiation if the light detector fails to receive the at least a portion of the light from the optical source or detects that an intensity of the at least a portion of the light received from the optical source is outside a predetermined intensity range.

In contrast to the prior art presented above, the optical source is arranged inside the optical system and includes a light emitting material that emits light upon laser excitation. Examples of such materials include luminescent materials such as so-called remote phosphor materials that generate phosphorescence/fluorescence in a certain wavelength range when stimulated with the proper excitation wavelengths ranges.

If desired, the remote luminescent material is permanently attached to the last optical element of the optical assembly. Preferably, all optical components that need safeguarding are placed at least partly in the optical beam path between the optical source and the light detector.

For example, the optical beam from the optical source may retrace the same beam path through the at least one optical element as the main laser. Illustratively, the optical beam may be redirected towards the light detector using a wavelength selective mirror or a polarization selective mirror in the first optical element of the at least one optical element that is first traversed by the laser beam.

Illustratively, the at least one optical element may include a predetermined number of optical components, an optical waveguide (e.g., optical fiber), and an optical beam shape assembly. If desired, one or more of the predetermined number of optical components and/or the optical waveguide may be omitted from the at least one optical element.

For example, the optical system may include one or more additional lasers, and the predetermined number of optical components may be used to couple in the one or more additional lasers into the same optical waveguide.

By way of example, the laser may send its light through the at least one optical element, and the optical beam shape assembly may transform the laser beam into the optical beam that is used for the target illumination application or target projection application.

Illustratively, a light emitting element that may comprise a wavelength conversion light emitting material is excited by the light from the laser. If desired, the light emitting element may be attached to one of the at least one optical element. For example, the light emitting element may be attached to the last optical component of the optical beam shape assembly. Preferably the light emitting element is attached to the last optical surface of the last optical component of the optical beam shape assembly.

At least a portion of the emitted light of the light emitting element preferably traverses the same beam path as the laser beam before reaching the light detector. Preferably the optical beam shape assembly includes optical design features that maximize the capture of the light of light emitting element in the laser beam path.

Illustratively, a wavelength selective mirror or a polarization selective mirror is used to redirect the light from the light emitting element from the laser beam path towards a light detector. As an example, if a wavelength selective mirror is used, the wavelength selective mirror should have minimal absorption of the laser source wavelength, and maximum reflectance for the sensing wavelength range under consideration at the light detector. As another example, if a polarization selective mirror is used, the emitted light should have a different polarization than the laser beam, and the polarization selective mirror should provide for minimal absorption of the laser source and maximum reflectance of the emitted light.

Preferably, the light detector is insensitive to the laser beam reflections from the optical components. This can be achieved by using a narrow optical bandpass filter in front of the light detector. A further advantage for using an optical bandpass filter is to make the safety setup less sensitive to laser source output power variations.

By way of example, the light detector shuts off the laser if it senses that the flux of the light of the light emitting element is outside predetermined upper and/or lower limits, whereby these limits dynamically follow the general dimming capability of the laser.

Illustratively, as a result of an optical fault condition on any part of the optical system, the detected flux of the light is outside the predetermined limits and the laser shuts off.

By way of example, the spectrum of the light from the optical source may be used to identify the composition of the at least one optical element. For example, the spectrum of the light may be associated with a certain combination of lenses in the optical beam shape assembly.

A luminescent material may have a specific spectrum under excitement of a laser. Such a luminescent material may be mounted to only one type of optical configuration. For instance, if the at least one optical element has a defined numerical aperture at the output, the selected luminescent material that corresponds to this configuration will radiate and by sampling the associated spectrum and comparing each line of power density relative to the other, the light detector may be able to identify which type of luminescent material is installed and by extend identify which type of configuration is installed.

If desired, each one of the optical elements of the at least one optical element may be marked by a luminescent material and the addition of the different spectrums of all the luminescent materials that comprise the optical source may form a sort of fingerprint of the optical system.

Thereby, the optical system may automatically detect the optical configuration of the at least one optical element without manually updating any system that requires the information. Moreover, bypassing and/or tampering with the at least one optical element may be detected, and thereby the optical system may be prevented from becoming weaponized or from becoming a blinding device.

Furthermore, the combination of a properly selected filter in front of the light detector and a specific emission spectrum of the optical source may lead to lesser dependency of the safety monitoring system on the laser source characteristics variations during laser operation.

The concept of this idea is that the luminescent material of the optical source acts like an optical buffer against excitation light variations. If desired, the luminescent material may include many different chemical elements.

Moreover, the present technology is able to monitor the integrity of all the optical components in the optical system, is low-cost, and practical to implement.

The present technology may also enable for additional optical waveguide sensor functionality. For example, the present technology may serve as a remote sensing system for real-time in-situ monitoring of physical parameters such as temperature or mechanical stresses along an optical waveguide component (e.g., an optical fiber). In such a scenario, the optical waveguide may incorporate at least one Bragg grating and the light detector may be able to track changes in incident wavelength.

As an example, the Bragg grating may act as a temperature and/or mechanical stress depending selectable wavelength filter. Combined with a broadband wavelength light emitter implemented by the luminescent material, a change in Bragg grating period under the influence of different physical parameters results in a tiny but detectable change of wavelength at the light detector. The change in wavelength can be linked back to the influence of the change of the different physical parameters acting upon the optical waveguide. Thereby, the optical waveguide component acts as a remote vibration and/or temperature sensor.

According to one aspect, the at least one optical element further comprises a last optical element that is arranged further away from the laser than any other optical element of the at least one optical element and comprises an entrance surface, and an exit surface for transmitting the optical beam, wherein the optical source is attached onto the exit surface of the at least one optical element, is dispersed inside the last optical element, is attached onto the entrance surface of the last optical element, or is located between the at least one optical element and the optical system exit plane.

According to one aspect, the optical system further comprises at least one additional optical element that is arranged between the optical source and the light detector.

According to one aspect, the at least one additional optical element further comprises a filter that filters at least a portion of the predetermined wavelength range of the light.

According to one aspect, the laser beam has a laser beam wavelength range that fails to overlap with the predetermined wavelength sensitivity range of the light detector.

According to one aspect, the laser beam wavelength range fails to overlap with the predetermined wavelength range of the light, and the at least one optical element comprises a wavelength selective mirror that reflects the at least a portion of the light and that is transparent for the laser beam.

According to one aspect, the at least one optical element comprises a polarization selective mirror that reflects the at least a portion of the light that has a different polarization than the laser beam.

According to one aspect, the at least a portion of the light traverses the at least one optical element from the optical source to the light detector.

According to one aspect, the optical source further comprises a luminescent material that generates a predetermined spectrum of the light with predetermined discrete wavelengths and associated predetermined amplitudes.

According to one aspect, the luminescent material comprises at least one of a fluorescent or phosphorescent substance.

According to one aspect, the luminescent material is selected based on a configuration of the at least one optical element, wherein the light detector is adapted for associating the predetermined spectrum of the light with the configuration of the at least one optical element, and wherein the light detector is further adapted for detecting tampering with the configuration of the at least one optical element in response to detecting a change in the spectrum of the light.

According to one aspect, the light detector is further adapted for detecting the predetermined discrete wavelengths and the associated predetermined amplitudes, for associating the predetermined discrete wavelengths and the associated predetermined amplitudes with the configuration of the at least one optical element, and for automatically adjusting the power of the laser based on detecting a predetermined change in the predetermined discrete wavelengths and/or a predetermined change in the associated predetermined amplitudes.

According to one aspect, the optical system further comprises at least one additional laser that emits an additional laser beam, wherein the light detector directs the additional laser to shut off if the light detector fails to receive the at least a portion of the light from the optical source or detects that the intensity of the at least a portion of the light received from the optical source is outside a predetermined intensity range.

According to one aspect, the additional laser beam contributes to exciting the optical source to generate the light.

Furthermore, a method of operating an optical system, the optical system comprising an optical system exit plane, a laser, at least one optical element, an optical source, and a light detector, comprises the operations of generating, with the laser, a laser beam; using the at least one optical element to form an optical beam from the laser beam; exposing the optical source to at least a portion of the optical beam or to at least a portion of laser beam; exciting a luminescent material in the optical source with the at least a portion of the optical beam or with the at least a portion of the laser beam to generate light having a predetermined spectrum; receiving at least a portion of the light with the light detector; using the light detector to detect failure of reception of the at least a portion of the light or to detect that an intensity of the at least a portion of the light received from the optical source is outside a predetermined intensity range, or to detect that an intensity of at least a portion of the predetermined spectrum is outside a predetermined intensity range; and directing the laser to shut off in response to the light detector detecting the failure of reception of the at least a portion of the light or in response to the light detector detecting that the intensity of the at least a portion of the light received from the optical source is outside the predetermined intensity range, or in response to the light detector detecting that the intensity of the at least a portion of the predetermined spectrum is outside the predetermined intensity range.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative optical system for generating an optical beam with an optical integrity monitoring system in accordance with some embodiments,
- Figure 2 is a diagram of an illustrative optical system for generating an optical beam with an optical integrity monitoring system that includes a selective mirror in accordance with some embodiments,
- Figure 3A is a diagram of a first spectrum of light generated by an illustrative optical source that generates light having discrete wavelengths within a predetermined wavelength range and associated predetermined amplitudes in accordance with some embodiments,
- Figure 3B is a diagram of a second spectrum of light generated by another illustrative optical source that generates light having discrete wavelengths within a predetermined wavelength range and associated predetermined amplitudes in accordance with some embodiments,
- Figure 4 is a diagram of an illustrative spectrum showing non-overlapping wavelength ranges of a laser beam and of light emitted by an optical source, and the wavelength sensitivity range of a light detector in accordance with some embodiments,
- Figure 5 is a diagram of an illustrative spectrum showing overlapping wavelength ranges of a laser beam and of light emitted by an optical source, and the wavelength sensitivity range of a light detector in accordance with some embodiments, and
- Figure 6 is a diagram of a flowchart showing illustrative operations of operating an optical system in accordance with some embodiments.

The present technology may be included in any devices or vehicles with an optical system that includes a laser and an optical element that forms an optical beam from the laser beam. Examples for devices may include laser cutting or welding machines, laser scanners and printers, optical distance measurement instruments, optical storage media, optical recognition devices, etc. Examples for vehicles may include airplanes, quadcopters, helicopters, drones, cars, buses, trucks, ships, etc.

The optical system for generating an optical beam from a laser beam may be arranged anywhere inside or outside the vehicle. For example, the optical system may be arranged anywhere inside or outside the vehicle in such a way that the optical system projects an optical beam into a public space.

As an example, in a High Intensity Search Light (HISL) of a helicopter, a high-power laser beam may be combined with a zoom lens optical system to provide for an adaptive optical beam diameter. As another example, a high-power laser beam may be combined with a diffractive optical element to project a ground pattern for situational awareness. As yet another example, a high-power laser beam may be combined with a digital mirror device (DMD) to project dynamic patterns.

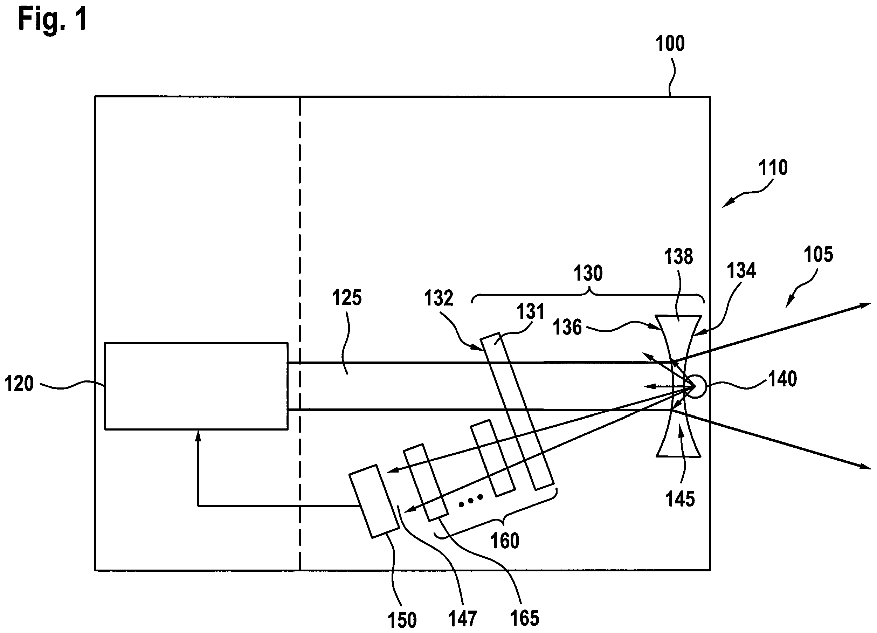

Figure 1 shows an example of an optical system 100 for generating an optical beam 105. As shown in Figure 1, the optical system 100 includes an optical system exit plane 110 through which the optical beam 105 exits the optical system 100, a laser 120 that emits a laser beam 125, and at least one optical element 130.

The at least one optical element 130 has an entrance surface 132 for receiving the laser beam 125 and is arranged at least partly between the laser 120 and the optical system exit plane 110. The at least one optical element 130 forms the optical beam 105 from the laser beam 125.

According to the invention, the at least one optical element 130 includes a first optical element 131. The first optical element 131 is arranged closer to the laser 120 than any other optical element of the at least one optical element 130. The first optical element 131 may include the entrance surface 132 for receiving the laser beam 125.

According to the invention, the at least one optical element 130 includes a last optical element 138. The last optical element 138 is arranged further away from the laser 120 than any other optical element of the at least one optical element 130. The last optical element 138 may include an entrance surface 136 and an exit surface 134 for transmitting the optical beam 105.

According to the invention, the at least one optical element 130 performs any transformation of incoming laser beam 125 to provide outgoing optical beam 105. For example, optical elements 130 may perform upon laser beam 125 transformations such as refraction, diffraction, reflection, dispersion, scattering, polarization, distortion, conversion, diversion, or any combination thereof. As a result, optical beam 105 may be inherently safe or may be safe outside the specified Nominal Ocular Hazard Distance (NOHD). In other words, transformed optical beam 105 may present no safety hazard or may pose a safety hazard only within the specified NOHD.

For example, as shown in Figure 1, the at least one optical element 130 may transform laser beam 125 into optical beam 105 such that transformed optical power is spread in a larger beam cone with potential lower peak intensity.

Optical beam 105 may be any optical beam with a given intensity. In some scenarios, optical beam 105 may become a safety hazard such as a hazard for a living being (e.g., an ocular hazard) or a fire hazard to objects. For example, optical beam 105 may become a safety hazard if any one of the at least one optical element 130 is defect or if the optical system 100 has been tampered with.

As a result, the laser beam 125 may exit the optical system as a high-power laser beam that may cause burns to the skin or permanent damage to the eye of a living being. Thus, optical system 100 includes a defect detecting device for detecting defects in optical system 100.

The defect detecting device in optical system 100 includes an optical source 140 and a light detector 150.

The optical source 140 generates light 145 within a predetermined wavelength range in response to being excited by at least a part of the laser beam 125. If desired, the optical source 140 may generate the light 145 exclusively based on photoluminescence. In other words, the optical source 140 may generate the light 145 exclusively as a result of the absorption of photons from the laser beam 125.

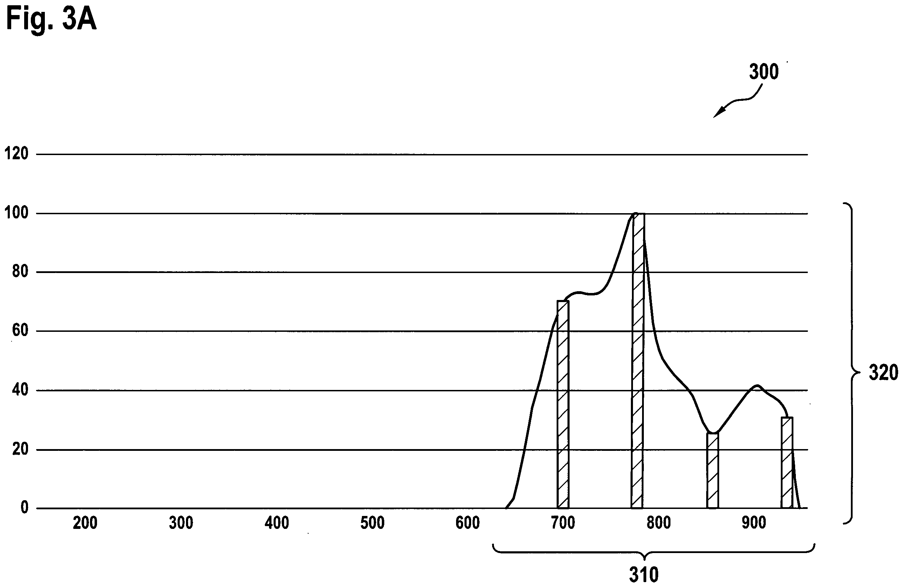

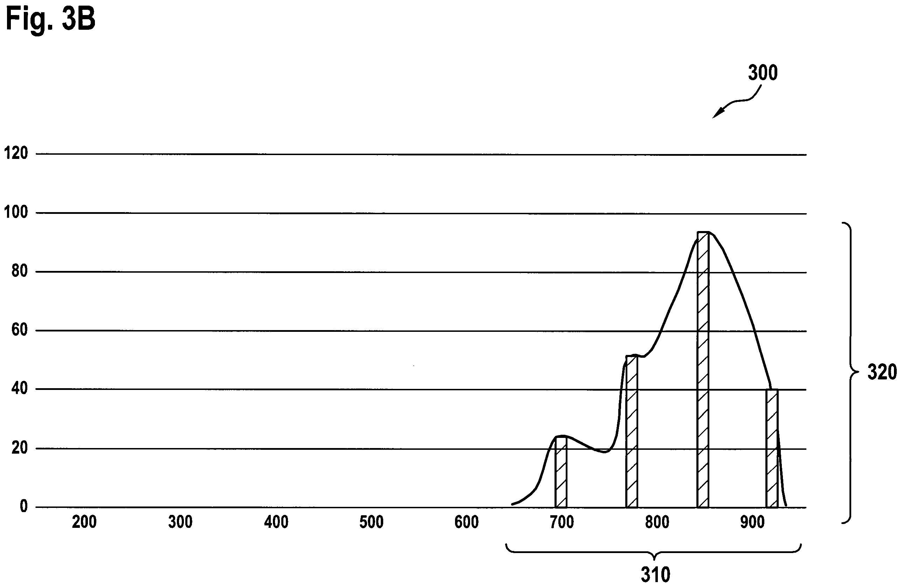

Illustratively, the optical source 140 may include a luminescent material. The luminescent material may generate a predetermined spectrum (e.g., spectrum 300 of Figure 3A or Figure 3B) of the light 145. If desired, the predetermined spectrum may have predetermined discrete wavelengths and associated predetermined amplitudes (e.g., discrete wavelengths 310 and associated amplitudes 320 of Figure 3A or Figure 3B).

By way of example, the luminescent material may include a photoluminescent material. For example, the luminescent material may include at least one of a fluorescent or phosphorescent substance.

The optical source 140 is arranged between the entrance surface 132 of the at least one optical element 130 and the optical system exit plane 110.

As an example, the optical source 140 may be attached onto the exit surface 134 of the at least one optical element 130. As another example, the optical source 140 may be dispersed inside the last optical element 138. As yet another example, the optical source 140 may be attached onto the entrance surface 136 of the last optical element 138. As yet another example, the optical source 140 may be located between the at least one optical element 130 and the optical system exit plane 110.

The light detector 150 is coupled to the laser 120 and adapted for receiving at least a portion 147 of the light 145 from the optical source 140. The light detector 150 has a predetermined wavelength sensitivity range that overlaps at least partly with the predetermined wavelength range of the light 145.

Preferably, the laser beam 125 has a laser beam wavelength range that fails to overlap with the predetermined wavelength sensitivity range of the light detector 150. Thereby, the light detector 150 may be insensitive to scattered light from the laser beam 125.

If desired, light detector 150 may include any device that converts the at least a portion 147 of the light 145 and/or information provided with the at least a portion 147 of the light 145 directly or indirectly into an electrical signal. For example, light detector 150 may include one or more of a photoresistor, a photocell, a photodiode, a phototransistor, a photomultiplier tube, a photovoltaic cell, etc.

Illustratively, the optical system may include at least one additional optical element 160. The at least one additional optical element 160 may be arranged between the optical source 140 and the light detector 150.

Exemplarily, the at least one additional optical element 160 may include a filter 165. The filter 160 may remove at least a portion of the predetermined wavelength range of the light 145. For example, the filter 165 may let pass through only the portion 147 of the light 145 that overlaps with the predetermined wavelength sensitivity range of the light detector 150.

If the optical system 100 is tampered with or if one of the optical elements 130 is defect, the light detector 150 may fail to receive the at least a portion 147 of the light 145 from the optical source 140. In other words, scenarios in which the at least a portion 147 of the light 145 fails to reach the light detector 150 or in which the intensity of the at least a portion 147 of the light 145 is outside a predetermined intensity range may be indicative of a defect in optical system 100 or indicative of a tampering with optical system 100. In such a scenario, the optical system 100 may become a safety hazard.

Therefore, the light detector 150 controls the laser 120 if the light detector 150 fails to receive the at least a portion 147 of the light 145 from the optical source 140 or if the light detector 150 detects that an intensity of the at least a portion 147 of the light 145 received from the optical source 140 is outside a predetermined intensity range. For example, the light detector 150 may shut off the laser 120 or direct the laser 120 to reduce a laser output radiation if the light detector 150 fails to receive the at least a portion 147 of the light 145 from the optical source 140 or detects that an intensity of the at least a portion 147 of the light 145 received from the optical source 140 is outside a predetermined intensity range.

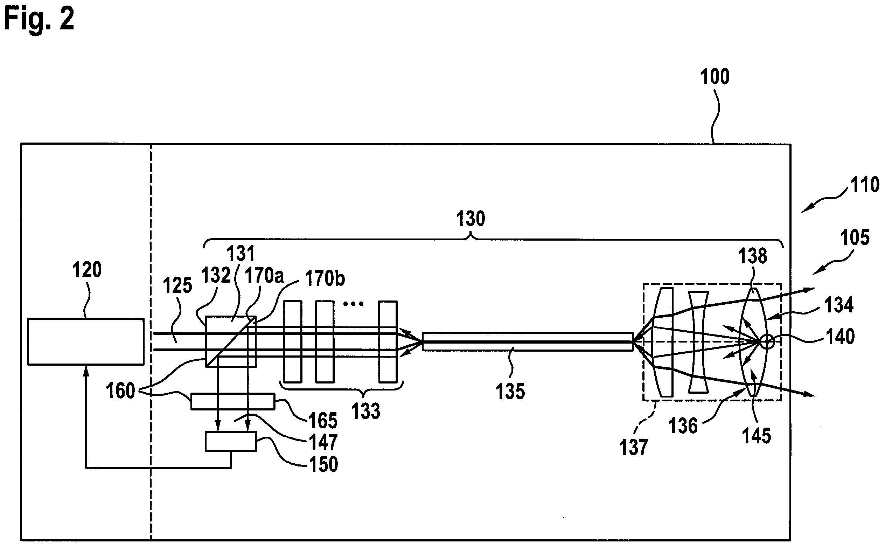

Figure 2 is a diagram of an illustrative optical system 100 for generating an optical beam 105 with an optical integrity monitoring system that includes a selective mirror 170a, 170b in accordance with some embodiments.

Illustratively, the optical system 100 includes an optical system exit plane 110 through which the optical beam 105 exits the optical system 100, a laser 120 that emits a laser beam 125, and at least one optical element 130 that is arranged between the laser 120 and the optical system exit plane 110. The at least one optical element 130 forms the optical beam 105 from the laser beam 125.

Illustratively, the at least one optical element 130 may include a first optical element 131. The first optical element 131 may be arranged closer to the laser 120 than any other optical element of the at least one optical element 130. The first optical element 131 may include the entrance surface 132 for receiving the laser beam 125.

By way of example, the at least one optical element 130 may include a last optical element 138. The last optical element 138 may be arranged further away from the laser 120 than any other optical element of the at least one optical element 130. The last optical element 138 may include an entrance surface 136 and an exit surface 134 for transmitting the optical beam 105.

Illustratively, the at least one optical element 130 may include a predetermined number of optical components 133, an optical waveguide 135 (e.g., optical fiber), and an optical beam shape assembly 137. As shown in Figure 2, all optical elements 130 are arranged between the entrance surface 132 of the first element 131 and the exit surface 134 of the last element 138.

By way of example, the laser beam 125 may traverse the first optical element 131, the predetermined number of optical components 133, the optical waveguide 135, and the optical beam shape assembly 137. If desired, the optical beam shape assembly 137 may transform the laser beam 125 into the optical beam 105 that is used for the target illumination application or target projection application.

Illustratively, the at least one optical element 130, and more particularly the optical beam shape assembly 137, may perform any transformation of incoming laser beam 125 to provide outgoing optical beam 105. For example, optical elements 130 may perform upon laser beam 125 transformations such as refraction, diffraction, reflection, dispersion, scattering, polarization, distortion, conversion, diversion, or any combination thereof. As a result, optical beam 105 may be inherently safe or may be safe outside the specified Nominal Ocular Hazard Distance (NOHD). In other words, transformed optical beam 105 may present no safety hazard or may pose a safety hazard only within the specified NOHD.

Optical system 100 includes a defect detecting device for detecting defects in optical system 100. The defect detecting device in optical system 100 includes an optical source 140 and a light detector 150.

The optical source 140 generates light 145 within a predetermined wavelength range in response to being excited by at least a part of the laser beam 125. For example, the optical source 140 may generate the light 145 exclusively based on photoluminescence. In other words, the optical source 140 generates the light 145 only as a result of the absorption of photons from the laser beam 125.

According to the invention, all optical elements of the at least one optical element 130 that need safeguarding are placed at least partly in the optical beam path between the optical source 140 and the light detector 150.

The optical source 140 may be attached onto the exit surface 134 of the at least one optical element 130, and/or dispersed inside the last optical element 138, and/or attached onto the entrance surface 136 of the last optical element 138, and/or located between the at least one optical element 130 and the optical system exit plane 110.

Illustratively, the light 145 may retrace the same beam path through the at least one optical element 130 from the optical source 140 to the light detector 150 as the laser beam 125. For example, as shown in Figure 2, in the scenario in which the optical source 140 is attached to the exit surface 134 of the last optical element 138, the light 145 may traverse the optical beam shape assembly 137, the optical waveguide 135, and the optical components 133. Preferably the optical beam shape assembly 137 includes optical design features that maximize the capture of the light 145 of the optical source 140 in the beam path of the laser beam 125.

By way of example, a selective mirror 170a, 170b may redirect the light 145 towards the light detector 150. Preferably, the selective mirror 170a, 170b may be arranged between the optical components 133 and the laser 120. As an example, the selective mirror 170a, 170b may be arranged inside the first optical element 131. As another example, the selective mirror 170a, 170b may be arranged between the first optical element 131 and the optical components 133. As yet another example, the selective mirror 170a, 170b may be arranged between any two components of the optical components 133.

Illustratively, the light 145 may be redirected towards the light detector 150 using at least one of a wavelength selective mirror 170a or a polarization selective mirror 170b.

As an example, consider the scenario in which the laser beam wavelength range fails to overlap with the predetermined wavelength range of the light 145. In this scenario, the at least one optical element 130 may include a wavelength selective mirror 170a that reflects the at least a portion 147 of the light 145 and that is transparent for the laser beam 125. Thus, the wavelength selective mirror 170a preferably has minimal absorption of the laser source wavelength, and maximum reflectance for the sensing wavelength range under consideration at the light detector 150.

As another example, consider the scenario in which the laser beam 125 has a different polarization than the light 145. For example, the light 145 may have a polarization that is shifted by 90° compared to the laser beam 125. In this scenario, the at least one optical element 130 may include a polarization selective mirror 170b that reflects the at least a portion 147 of the light 145 that has a different polarization than the laser beam 125. Thus, the polarization selective mirror 170b preferably has minimal absorption of the laser beam 125 and maximum reflectance of the light 145.

The light detector 150 is coupled to the laser 120 and adapted for receiving at least a portion 147 of the light 145 from the optical source 140. The light detector 150 has a predetermined wavelength sensitivity range that overlaps at least partly with the predetermined wavelength range of the light 145.

If desired, light detector 150 may include any device that converts the at least a portion 147 of the light 145 and/or information provided with the at least a portion 147 of the light 145 directly or indirectly into an electrical signal. For example, light detector 150 may include one or more of a photoresistor, a photocell, a photodiode, a phototransistor, a photomultiplier tube, a photovoltaic cell, etc.

If the optical system 100 is tampered with or if one of the optical elements 130 is defect, the light detector 150 may fail to receive the at least a portion 147 of the light 145 from the optical source 140. In other words, scenarios in which the at least a portion 147 of the light 145 fails to reach the light detector 150 or in which the intensity of the at least a portion 147 of the light 145 is outside a predetermined intensity range may be indicative of a defect in optical system 100 or indicative of a tampering with optical system 100. In such a scenario, the optical system 100 may become a safety hazard.

Therefore, the light detector 150 controls the laser 120 if the light detector 150 fails to receive the at least a portion 147 of the light 145 from the optical source 140 or if the light detector 150 detects that an intensity of the at least a portion 147 of the light 145 received from the optical source 140 is outside a predetermined intensity range. For example, the light detector 150 may shut off the laser 120 or direct the laser 120 to reduce a laser output radiation if the light detector 150 fails to receive the at least a portion 147 of the light 145 from the optical source 140 or detects that an intensity of the at least a portion 147 of the light 145 received from the optical source 140 is outside a predetermined intensity range.

Illustratively, the optical system 100 may include at least one additional laser 120 that emits an additional laser beam 125, and the light detector 150 may direct the additional laser 120 to shut off if the light detector 150 fails to receive the at least a portion 147 of the light 145 from the optical source 140 or detects that the intensity of the at least a portion 147 of the light 145 received from the optical source 140 is outside a predetermined intensity range. If desired, the additional laser beam 125 may contribute to exciting the optical source 140 to generate the light 145.

By way of example, the optical source 140 may include a luminescent material. The luminescent material may generate a predetermined spectrum of the light 145. If desired, the predetermined spectrum may have predetermined discrete wavelengths and associated predetermined amplitudes.

Figure 3A is a diagram of a first spectrum 300 and Figure 3B is a diagram of a second spectrum 300 of light from an illustrative optical source that generates light having discrete wavelengths within a predetermined wavelength range 310 and associated predetermined amplitudes 320 in accordance with some embodiments.

As shown in Figures 3A and 3B, the two spectrums differ only in the amplitudes 320 of the discrete wavelengths within the predetermined wavelength range 310. However, the optical source 140 may be adapted for generating any spectrum 300 of light (e.g., through the selection of the luminescent material).

As an example, the light generated by the optical source may have a continuous spectrum within the predetermined wavelength range 310. As another example, the predetermined wavelength range 310 may be shifted or extended compared to the illustrations of Figures 3A or 3B. As yet another example, the spectrum may include more than four discrete wavelengths within the predetermined wavelength range 310.

Illustratively, the luminescent material may be selected based on a configuration of the at least one optical element, and the light detector may be adapted for associating the predetermined spectrum 300 of the light with the configuration of the at least one optical element. The light detector may further be adapted for detecting tampering with the configuration of the at least one optical element in response to detecting a change in the spectrum 300 of the light.

If desired, the light detector may further be adapted for detecting the predetermined discrete wavelengths 310 and the associated predetermined amplitudes 320, for associating the predetermined discrete wavelengths 310 and the associated predetermined amplitudes 320 with the configuration of the at least one optical element, and for automatically adjusting the power of the laser based on detecting a predetermined change in the predetermined discrete wavelengths 310 and/or a predetermined change in the associated predetermined amplitudes 320.

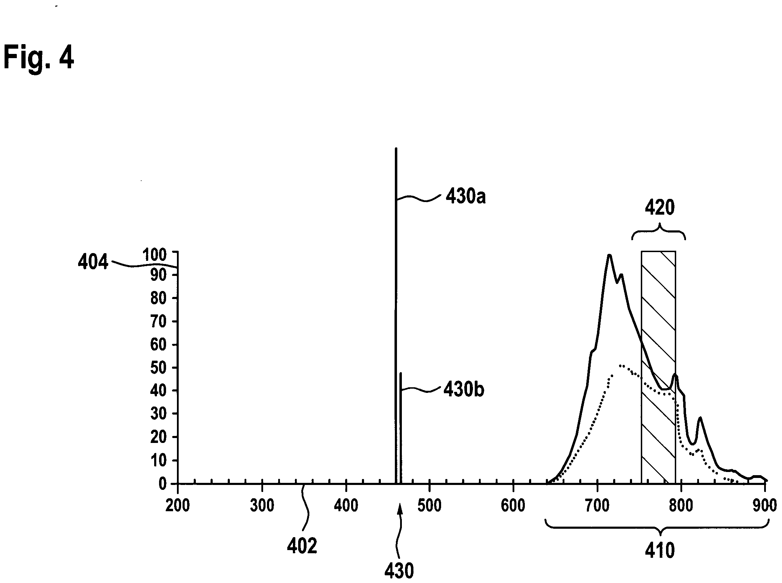

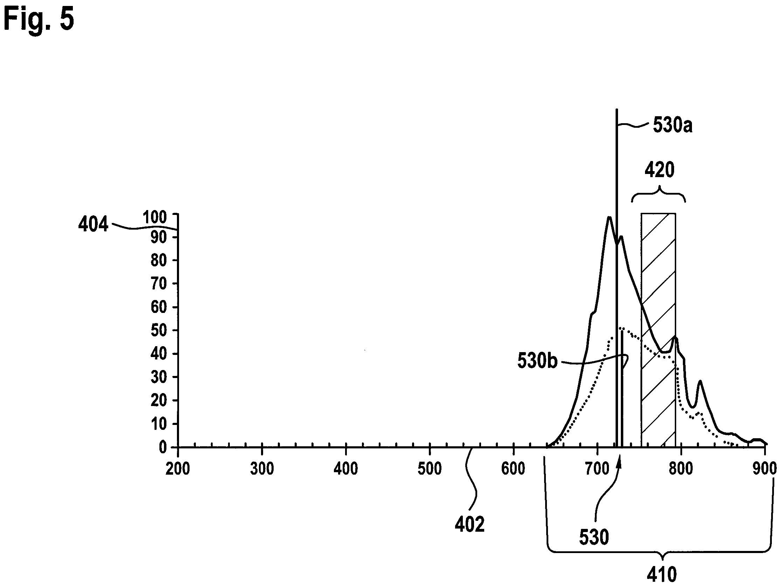

Figure 4 and Figure 5 are diagrams of illustrative representations of spectrums in a cartesian coordinate system. The abscissa of the respective cartesian coordinate system shows the wavelength 402, and the ordinate of the respective cartesian coordinate system shows the relative irradiance 404.

Both, Figures 4 and 5, show the wavelength range 430 and 530 of the laser beam (e.g., laser beam 125 of Figure 1 or Figure 2) with different intensities 430a, 430b, and 530a, 530b, the wavelength range 410 of the light emitted by the optical source (e.g., light 145 of optical source 140 of Figure 1 or Figure 2), and the wavelength sensitivity range 430 of the light detector (e.g., light detector 150 of Figure 1 or Figure 2).

As shown in Figure 4, the wavelength range 430 of the laser beam 430 is non-overlapping with the wavelength range 410 of the light emitted by the optical source and the wavelength sensitivity range 420 of the light detector. However, a portion of the wavelength range 410 of the light is overlapping with the sensitivity range 420 of the light detector. Thus, the selective mirror of Figure 2 may be a wavelength selective mirror 170a as the wavelength range 410 of the light is non-overlapping with the wavelength range 430 of the laser beam. If desired, the selective mirror of Figure 2 may be a polarization selective mirror 170b.

In contrast thereto, as shown in Figure 5, the wavelength range 530 of the laser beam is overlapping with the wavelength range 410 of the light emitted by the optical source, but non-overlapping with the wavelength sensitivity range 420 of the light detector. Thus, the selective mirror of Figure 2 may be a polarization selective mirror 170b. The selective mirror of Figure 2 may only be a wavelength selective mirror 170a if the mirror has minimal absorption of the wavelength range 530 of the laser beam and maximum reflectance of the wavelength sensitivity range 420 of the light detector.

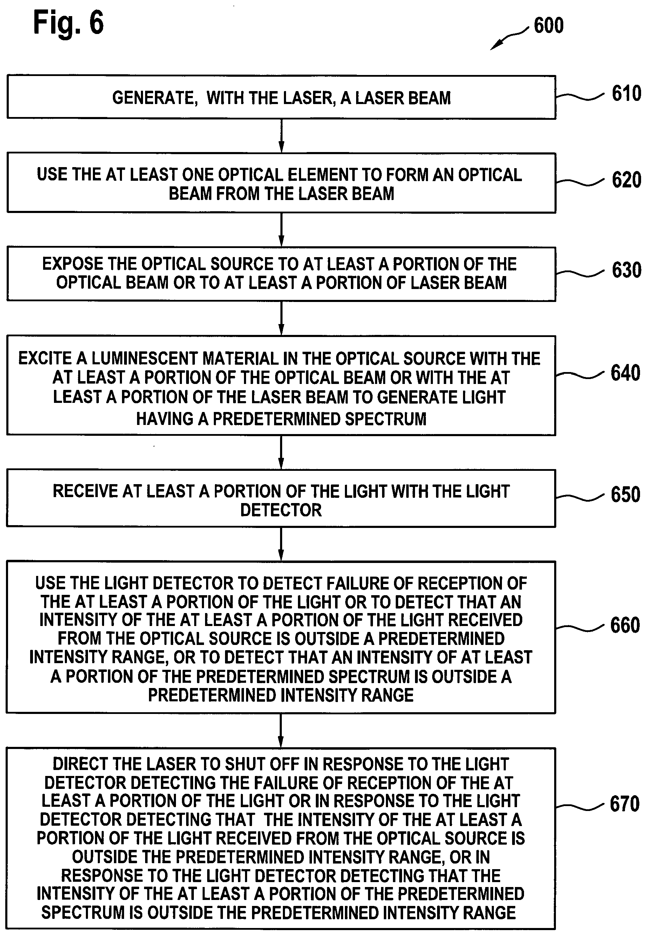

Figure 6 is a diagram of a flowchart 600 showing illustrative operations of operating an optical system such as optical system 100 of Figure 1 or Figure 2. As shown in Figure 1 or Figure 2, the optical system 100 may include an optical system exit plane 110, a laser 120, at least one optical element 130, an optical source 140, and a light detector 150.

During operation 610, the laser of the optical system generates a laser beam. For example, laser 120 of optical system 100 of Figure 1 or Figure 2 generates laser beam 125.

During operation 620, the optical system uses the at least one optical element to form an optical beam from the laser beam. For example, the at least one optical element 130 of Figure 1 or Figure 2 forms optical beam 105 from laser beam 125.

During operation 630, the optical system exposes the optical source to at least a portion of the optical beam or to at least a portion of the laser beam. For example, optical system 100 of Figure 1 or Figure 2 exposes the optical source 140 to at least a portion of the optical beam 105 or to at least a portion of the laser beam 125.

During operation 640, the optical system excites a luminescent material in the optical source with the at least a portion of the optical beam or with the at least a portion of the laser beam to generate light having a predetermined spectrum. For example, optical system 100 of Figure 1 or Figure 2 excites a luminescent material in the optical source 140 with the at least a portion of the optical beam 105 or with the at least a portion of the laser beam 125 to generate light 145 having a predetermined spectrum.

During operation 650, the optical system receives at least a portion of the light with the light detector. For example, optical system 100 of Figure 1 or Figure 2 receives at least a portion of the light 145 with the light detector 150.

During operation 660, the optical system uses the light detector to detect failure of reception of the at least a portion of the light or to detect that an intensity of the at least a portion of the light received from the optical source is outside a predetermined intensity range, or to detect that an intensity of at least a portion of the predetermined spectrum is outside a predetermined intensity range.

For example, optical system 100 of Figure 1 or Figure 2 uses the light detector 150 to detect failure of reception of the at least a portion 147 of the light 145 or to detect that an intensity of the at least a portion 147 of the light 145 received from the optical source 140 is outside a predetermined intensity range, or to detect that an intensity of at least a portion of the predetermined spectrum is outside a predetermined intensity range.

During operation 670, the light detector of the optical system directs the laser to shut off in response to the light detector detecting the failure of reception of the at least a portion of the light or in response to the light detector detecting that the intensity of the at least a portion of the light received from the optical source is outside the predetermined intensity range, or in response to the light detector detecting that the intensity of the at least a portion of the predetermined spectrum is outside the predetermined intensity range.

For example, light detector 150 of optical system 100 of Figure 1 or Figure 2 directs the laser 120 to shut off in response to the light detector 150 detecting the failure of reception of the at least a portion 147 of the light 145 or in response to the light detector 150 detecting that the intensity of the at least a portion 147 of the light 145 received from the optical source 140 is outside the predetermined intensity range, or in response to the light detector 150 detecting that the intensity of the at least a portion of the predetermined spectrum is outside the predetermined intensity range.

If desired, the light detector may associate the predetermined spectrum with a configuration of the at least one optical element and detect tampering with the configuration of the at least one optical element in response to detecting a change in the spectrum.

It should be noted that the above-described embodiments are merely described for illustration purposes, but not in order to restrict the present invention thereto. Instead, multiple modifications and variations of the presented embodiments are possible and should, therefore, also be considered as being part of the invention.

For example, the selective mirror 170a, 170b of Figure 2 may be arranged between the first optical element 131 and the laser 120, between the optical waveguide 135 and the optical beam shape assembly 137, or between any two components of the optical beam shape assembly 137.

Furthermore, the wavelength range 430, 530 of the laser beam of Figures 4 and 5 is shown to be non-overlapping with the wavelength sensitivity range 420 of the light detector. However, the wavelength range 430, 530 of the laser beam may be overlapping with the wavelength sensitivity range 420 of the light detector. In such a scenario, additional measures may be required to prevent scattered light from the laser beam to reach the light detector, and the selective mirror of Figure 2 must be a polarization selective mirror 170b.

Moreover, the filter 165 of the at least one additional optical element 160 of Figure 1 or Figure 2 is described as filtering at least a portion of the predetermined wavelength range of the light 145 such as letting pass through only the portion 147 of the light 145 that overlaps with the predetermined wavelength sensitivity range of the light detector 150. However, the filter 165 may be any type of filter. As an example, the filter 165 may be a low pass filter that filters out all wavelengths below a predetermined threshold (e.g., the lower wavelength of the predetermined wavelength sensitivity range 420 of Figure 4). If desired, the filter 165 may be omitted.

### Reference List

- 100: optical system
- 105: optical beam
- 110: optical system exit plane
- 120: laser
- 125: laser beam
- 130: optical element
- 131: first optical element
- 132: entrance surface
- 133: optical components
- 134: exit surface
- 135: optical waveguide
- 136: entrance surface
- 137: optical beam shape assembly
- 138: last optical element
- 140: optical source
- 145: light
- 147: light portion
- 150: light detector
- 160: additional optical element
- 165: filter
- 170a: wavelength selective mirror
- 170b: polarization selective mirror
- 300: spectrum
- 310: discrete wavelength
- 320: amplitudes
- 402: wavelength
- 404: relative irradiance
- 410: wavelength range
- 420: wavelength sensitivity range of light detector
- 430: wavelength range of laser beam
- 430a, 430b: intensity of laser beam
- 530: wavelength range of laser beam
- 530a, 530b: intensity of laser beam
- 600: flowchart
- 610, 620, 630, 640, 650, 660, 670: operations.

## Claims

1. An optical system (100) for generating an optical beam (105), comprising:
an optical system exit plane (110) through which the optical beam (105) exits the optical system (100);
a laser (120) that emits a laser beam (125);
at least one optical element (130) that is arranged at least partly between the laser (120) and the optical system exit plane (110) and that forms the optical beam (105) from the laser beam (125), wherein the at least one optical element (130) comprises an entrance surface (132) for receiving the laser beam (125);
an optical source (140) that is arranged between the entrance surface (132) of the at least one optical element (130) and the optical system exit plane (110), wherein the optical source (140) generates light (145) within a predetermined wavelength range (410) in response to being excited by at least a part of the laser beam (125); and
a light detector (150) that is coupled to the laser (120) and adapted for receiving at least a portion (147) of the light (145) from the optical source (140), wherein the light detector (150) has a predetermined wavelength sensitivity range (420) that overlaps at least partly with the predetermined wavelength range (410) and wherein the light detector (150) controls the laser (120) if the light detector (150) fails to receive the at least a portion (147) of the light (145) from the optical source (140) or detects that an intensity of the at least a portion (147) of the light (145) received from the optical source (140) is outside a predetermined intensity range; and wherein the at least one optical element (130) further comprises:
at least one last optical element (138) that is arranged further away from the laser (120) than any other optical element of the at least one optical element (130) and comprises an entrance surface (136) and at least one first optical element (131) that is arranged closer to the laser (120) than any other optical element of the at least one optical element (130); **characterized in that** the system further comprises:
an exit surface (134) of the at least one last optical element (138) for transmitting the optical beam (105), wherein the optical source (140) is attached onto the exit surface (134) of the at least one optical element (130), and arranged to have the light (145) within the predetermined wavelength range (410) dispersed inside the at least one last optical element (138), the optical source (140) being attached onto the entrance surface (136) of the at least one last optical element (138), or being located between the at least one optical element (130) and the optical system exit plane (110); and wherein all optical elements of the at least one optical element (130) are placed at least partly in the optical beam path between the optical source (140) and the light detector (150).

2. The optical system (100) of claim 1, further comprising:
at least one additional optical element (160) that is arranged between the optical source (140) and the light detector (150).

3. The optical system (100) of claim 2, wherein the at least one additional optical element (160) further comprises:
a filter (165) that filters at least a portion of the predetermined wavelength range (410) of the light (145).

4. The optical system (100) of claim 2, wherein the laser beam (125) has a laser beam wavelength range (430) that fails to overlap with the predetermined wavelength sensitivity range (420) of the light detector (150).

5. The optical system (100) of claim 4, wherein the laser beam wavelength range (430) fails to overlap with the predetermined wavelength range (410) of the light (145), and wherein the at least one optical element (130) comprises a wavelength selective mirror (170a) that reflects the at least a portion (147) of the light (145) and that is transparent for the laser beam (125).

6. The optical system (100) of claim 4, wherein the at least one optical element (130) comprises a polarization selective mirror (170b) that reflects the at least a portion (147) of the light (145) that has a different polarization than the laser beam (125).

7. The optical system (100) of any one of claims 5 or 6, wherein the at least a portion of the light (145) traverses the at least one optical element (130) from the optical source (140) to the light detector (150).

8. The optical system (100) of any one of the preceding claims, wherein the optical source (140) further comprises:
a luminescent material that generates a predetermined spectrum (300) of the light (145) with predetermined discrete wavelengths (310) and associated predetermined amplitudes (320).

9. The optical system (100) of claim 8, wherein the luminescent material comprises at least one of a fluorescent or phosphorescent substance.

10. The optical system (100) of any one of claims 8 or 9, wherein the luminescent material is selected based on a configuration of the at least one optical element (130), wherein the light detector (150) is adapted for associating the predetermined spectrum (300) of the light (145) with the configuration of the at least one optical element (130), and wherein the light detector (150) is further adapted for detecting tampering with the configuration of the at least one optical element (130) in response to detecting a change in the spectrum (300) of the light (145).

11. The optical system (100) of claim 10, wherein the light detector (150) is further adapted for detecting the predetermined discrete wavelengths (310) and the associated predetermined amplitudes (320), for associating the predetermined discrete wavelengths (310) and the associated predetermined amplitudes (320) with the configuration of the at least one optical element (130), and for automatically adjusting the power of the laser (120) based on detecting a predetermined change in the predetermined discrete wavelengths (310) and/or a predetermined change in the associated predetermined amplitudes (320).

12. The optical system (100) of any one of the preceding claims, further comprising:
at least one additional laser (120) that emits an additional laser beam (125), wherein the light detector (150) directs the additional laser (120) to shut off if the light detector (150) fails to receive the at least a portion (147) of the light (145) from the optical source (140) or detects that the intensity of the at least a portion (147) of the light (145) received from the optical source (140) is outside a predetermined intensity range.

13. The optical system (100) of claim 12, wherein the additional laser beam (125) contributes to exciting the optical source (140) to generate the light (145).

14. A method (600) of operating an optical system (100) of any one of the preceding claims, the optical system (100) comprising an optical system exit plane (110), a laser (120), at least one optical element (130), an optical source (140), and a light detector (150), the method comprising:
generating (610), with the laser (120), a laser beam (125);
using (620) the at least one optical element (130) to form an optical beam (105) from the laser beam (125);
exposing (630) the optical source (140) to at least a portion of the optical beam (105) or to at least a portion of laser beam (125);
exciting (640) a luminescent material in the optical source (140) with the at least a portion of the optical beam (105) or with the at least a portion of the laser beam (125) to generate light (145) having a predetermined spectrum (300);
receiving (650) at least a portion of the light (145) with the light detector (150);
using (660) the light detector (150) to detect failure of reception of the at least a portion (147) of the light (145) or to detect that an intensity of the at least a portion (147) of the light (145) received from the optical source (140) is outside a predetermined intensity range, or to detect that an intensity of at least a portion of the predetermined spectrum (300) is outside a predetermined intensity range; and
directing (670) the laser (120) to shut off in response to the light detector (150) detecting the failure of reception of the at least a portion (147) of the light (145) or in response to the light detector (150) detecting that the intensity of the at least a portion (147) of the light (145) received from the optical source (140) is outside the predetermined intensity range, or in response to the light detector (150) detecting that the intensity of the at least a portion of the predetermined spectrum (300) is outside the predetermined intensity range.

## Patentansprüche

1. Optisches System (100) zum Erzeugen eines optischen Strahls (105), das umfasst:
eine Austrittsebene (110) des optischen Systems, durch die der optische Strahl (105) das optische System (100) verlässt;
einen Laser (120), der einen Laserstrahl (125) aussendet;
mindestens ein optisches Element (130), das zumindest teilweise zwischen dem Laser (120) und der Austrittsebene (110) des optischen Systems angeordnet ist und das aus dem Laserstrahl (125) den optischen Strahl (105) bildet, wobei das mindestens eine optische Element (130) eine Eintrittsfläche (132) zum Empfangen des Laserstrahls (125) umfasst;
eine optische Quelle (140), die zwischen der Eintrittsfläche (132) des mindestens einen optischen Elements (130) und der Ausgangsebene (110) des optischen Systems angeordnet ist, wobei die optische Quelle (140) in Reaktion auf Anregung durch mindestens einen Teil des Laserstrahls (125) Licht (145) innerhalb eines vorgegebenen Wellenlängenbereichs (410) erzeugt; und
einen Lichtdetektor (150), der mit dem Laser (120) gekoppelt ist und eingerichtet ist, um zumindest einen Teil (147) des Lichts (145) von der optischen Quelle (140) zu empfangen, wobei der Lichtdetektor (150) einen vorgegebenen Wellenlängenempfindlichkeitsbereich (420) aufweist, der sich zumindest teilweise mit dem vorgegebenen Wellenlängenbereich (410) überschneidet, und wobei der Lichtdetektor (150) den Laser (120) steuert, wenn der Lichtdetektor (150) den zumindest einen Teil (147) des Lichts (145) von der optischen Quelle (140) nicht empfängt oder feststellt, dass eine Intensität des zumindest einen Teils (147) des von der optischen Quelle (140) empfangenen Lichts (145) außerhalb eines vorgegebenen Intensitätsbereichs liegt; und wobei das mindestens eine optische Element (130) ferner umfasst:
mindestens ein letztes optisches Element (138), das weiter von dem Laser (120) entfernt angeordnet ist als jedes andere optische Element des mindestens einen optischen Elements (130), und das eine Eintrittsfläche (136) umfasst, und mindestens ein erstes optisches Element (131), das näher an dem Laser (120) angeordnet ist als jedes andere optische Element des mindestens einen optischen Elements (130); **dadurch gekennzeichnet, dass** das System ferner umfasst:
eine Austrittsfläche (134) des mindestens einen letzten optischen Elements (138) zum Aussenden des optischen Strahls (105), wobei die optische Quelle (140) an der Austrittsfläche (134) des mindestens einen optischen Elements (130) angebracht ist, und eigerichtet ist, um eine Streuung des Lichts (145) innerhalb des vorgegebenen Wellenlängenbereichs (410) in dem mindestens einen letzten optischen Element (138) zu bewirken, wobei die optische Quelle (140) an der Eintrittsfläche (136) des mindestens einen letzten optischen Elements (138) angebracht ist oder sich zwischen dem mindestens einen optischen Element (130) und der Ausgangsebene (110) des optischen Systems befindet; und wobei alle optischen Elemente des mindestens einen optischen Elements (130) zumindest teilweise in dem optischen Strahlengang zwischen der optischen Quelle (140) und dem Lichtdetektor (150) angeordnet sind.

2. Optisches System (100) nach Anspruch 1, das ferner mindestens ein zusätzliches optisches Element (160) umfasst, das zwischen der optischen Quelle (140) und dem Lichtdetektor (150) angeordnet ist.

3. Optisches System (100) nach Anspruch 2, bei dem das mindestens eine zusätzliche optische Element (160) ferner einen Filter (165) umfasst, der zumindest einen Teil des vorgegebenen Wellenlängenbereichs (410) des Lichts (145) filtert.

4. Optisches System (100) nach Anspruch 2, bei dem der Laserstrahl (125) einen Laserstrahl-Wellenlängenbereich (430) aufweist, der nicht mit dem vorgegebenen Empfindlichkeitswellenlängenbereich (420) des Lichtdetektors (150) überschneidet.

5. Optisches System (100) nach Anspruch 4, bei dem sich der Wellenlängenbereich (430) des Laserstrahls nicht mit dem vorgegebenen Wellenlängenbereich (410) des Lichts (145) überschneidet, und bei dem das mindestens eine optische Element (130) einen wellenlängenselektiven Spiegel (170a) umfasst, der mindestens einen Teil (147) des Lichts (145) reflektiert und der für den Laserstrahl (125) transparent ist.

6. Optisches System (100) nach Anspruch 4, bei dem das mindestens eine optische Element (130)
einen polarisationsselektiven Spiegel (170b) umfasst, der den mindestens einen Teil (147) des Lichts (145) reflektiert, der eine andere Polarisation als der Laserstrahl (125) aufweist.

7. Optisches System (100) nach einem der Ansprüche 5 oder 6, bei dem mindestens ein Teil des Lichts (145) das mindestens eine optische Element (130) von der optischen Quelle (140) zum Lichtdetektor (150) durchläuft.

8. Optisches System (100) nach einem der vorhergehenden Ansprüche, bei dem die optische Quelle (140) ferner
ein lumineszierendes Material umfasst, das ein vorgegebenes Spektrum (300) des Lichts (145) mit vorgegebenen diskreten Wellenlängen (310) und zugeordneten vorgegebenen Amplituden (320) erzeugt.

9. Optisches System (100) nach Anspruch 8, bei dem das lumineszierende Material mindestens eine fluoreszierende oder phosphoreszierende Substanz umfasst.

10. Optisches System (100) nach einem der Ansprüche 8 oder 9, bei dem das lumineszierende Material auf der Grundlage einer Konfiguration des mindestens einen optischen Elements (130) ausgewählt ist, bei dem der Lichtdetektor (150) eingerichtet ist, um das vorgegebene Spektrum (300) des Lichts (145) der Konfiguration des mindestens einen optischen Elements (130) zuzuordnen, und bei dem der Lichtdetektor (150) ferner eingerichtet ist, um als Reaktion auf die Erfassung einer Änderung des Spektrums (300) des Lichts (145) eine Manipulation der Konfiguration des mindestens einen optischen Elements (130) zu erkennen.

11. Optisches System (100) nach Anspruch 10, bei dem der Lichtdetektor (150) ferner eingerichtet ist, um die vorgegebenen diskreten Wellenlängen (310) und die zugeordneten vorgegebenen Amplituden (320) zu detektieren, um die vorgegebenen diskreten Wellenlängen (310) und die zugeordneten vorgegebenen Amplituden (320) mit der Konfiguration des mindestens einen optischen Elements (130) zu verknüpfen und um die Leistung des Lasers (120) auf der Grundlage der Detektion einer vorgegebenen Änderung der vorgegebenen diskreten Wellenlängen (310) und/oder einer vorgegebenen Änderung der zugeordneten vorgegebenen Amplituden (320) automatisch einzustellen.

12. Optisches System (100) nach einem der vorhergehenden Ansprüche, das ferner:
mindestens einen zusätzlichen Laser (120) umfasst, der einen zusätzlichen Laserstrahl (125) aussendet, wobei der Lichtdetektor (150) den zusätzlichen Laser (120) anweist, sich abzuschalten, wenn der Lichtdetektor (150) den mindestens einen Teil (147) des Lichts (145) von der optischen Quelle (140) nicht empfängt oder feststellt, dass die Intensität des mindestens einen Teils (147) des von der optischen Quelle (140) empfangenen Lichts (145) außerhalb eines vorgegebenen Intensitätsbereichs liegt.

13. Optisches System (100) nach Anspruch 12, bei dem der zusätzliche Laserstrahl (125) dazu beiträgt, die optische Quelle (140) anzuregen, um das Licht (145) zu erzeugen.

14. Verfahren (600) zum Betreiben eines optischen Systems (100) nach einem der vorhergehenden Ansprüche, bei dem das optische System (100) eine Ausgangsebene (110) des optischen Systems, einen Laser (120), mindestens ein optisches Element (130), eine optische Quelle (140) und einen Lichtdetektor (150) umfasst, wobei das Verfahren umfasst:
Erzeugen (610) eines Laserstrahl (125) mit dem Laser (120);
Verwenden (620) des mindestens einen optischen Elements, um aus dem Laserstrahl (125) einen optischen Strahl (105) zu bilden (130);
Belichten (630) der optischen Quelle (140) mit mindestens einem Teil des optischen Strahls (105) oder mit mindestens einem Teil des Laserstrahls (125);
Anregen (640) eines lumineszierenden Materials in der optischen Quelle (140) mit dem mindestens einen Teil des optischen Strahls (105) oder mit dem mindestens einen Teil des Laserstrahls (125), um Licht (145) mit einem vorgegebenen Spektrum (300) zu erzeugen;
Empfangen (650) mindestens eines Teils des Lichts (145) mit dem Lichtdetektor (150);
Verwenden (660) des Lichtdetektors (150), um ein Scheitern des Empfangs des mindestens einen Teils (147) des Lichts (145) zu erfassen oder um zu erfassen, dass eine Intensität des mindestens einen Teils (147) des von der optischen Quelle (140) empfangenen Lichts (145) außerhalb eines vorgegebenen Intensitätsbereichs liegt, oder um zu erfassen, dass eine Intensität von mindestens einem Teil des vorgegebenen Spektrums (300) außerhalb eines vorgegebenen Intensitätsbereichs liegt; und
Anweisen (670) des Lasers (120), sich abzuschalten, als Reaktion darauf, dass der Lichtdetektor (150) das Scheitern des Empfangs des mindestens einen Teils (147) des Lichts (145) erfasst, oder als Reaktion darauf, dass der Lichtdetektor (150) erfasst, dass die Intensität des mindestens einen Teils (147) des von der optischen Quelle (140) empfangenen Lichts (145) außerhalb des vorgegebenen Intensitätsbereichs liegt, oder als Reaktion darauf, dass der Lichtdetektor (150) erfasst, dass die Intensität des mindestens einen Teils des vorgegebenen Spektrums (300) außerhalb des vorgegebenen Intensitätsbereichs liegt.

## Revendications

1. Système (100) optique pour la génération d'un faisceau (105) optique, comprenant :
un plan (110) de sortie de système optique par lequel le faisceau (105) optique sort du système (100) optique ;
un laser (120) qui émet un faisceau (125) laser ;
au moins un élément (130) optique qui est aménagé au moins en partie entre le laser (120) et le plan (110) de sortie de système optique et qui forme le faisceau (105) optique à partir du faisceau (125) laser, dans lequel ledit au moins un élément (130) optique comprend une surface (132) d'entrée pour recevoir le faisceau (125) laser ;
une source (140) optique qui est aménagée entre la surface (132) d'entrée dudit au moins un élément (130) optique et le plan (110) de sortie de système optique, dans lequel la source (140) optique génère de la lumière (145) dans un intervalle (410) prédéterminé de longueurs d'onde en réponse à une excitation par au moins une partie du faisceau (125) laser ; et
un détecteur (150) de lumière qui est couplé au laser (120) et apte à recevoir au moins une partie (147) de la lumière (145) provenant de la source (140) optique, dans lequel le détecteur (150) de lumière possède un intervalle (420) prédéterminé de sensibilité aux longueurs d'onde, qui chevauche au moins en partie l'intervalle (410) prédéterminé de longueurs d'onde et dans lequel le détecteur (150) de lumière commande le laser (120) si le détecteur (150) de lumière ne parvient pas à recevoir ladite au moins une partie (147) de la lumière (145) provenant de la source (140) optique ou détecte qu'une intensité de ladite au moins une partie (147) de la lumière (145) reçue depuis la source (140) optique se trouve en dehors d'un intervalle prédéterminé d'intensité ; et dans lequel ledit au moins un élément (130) optique comprend en outre :
au moins un dernier élément (138) optique qui est aménagé à plus grande distance du laser (120) qu'un quelconque autre élément optique dudit au moins un élément (130) optique et comprend une surface (136) d'entrée et au moins un premier élément (131) optique qui est aménagé plus près du laser (120) qu'un quelconque autre élément optique dudit au moins un élément (130) optique; **caractérisé en ce que** le système comprend en outre :
une surface (134) de sortie dudit au moins un dernier élément (138) optique afin de transmettre le faisceau (105) optique, dans lequel la source (140) optique est fixée sur la surface (134) de sortie dudit au moins un élément (130) optique, et aménagée de façon que la lumière (145) se trouvant dans l'intervalle (410) prédéterminé de longueurs d'onde soit dispersée à l'intérieur dudit au moins un dernier élément (138) optique, la source (140) optique étant fixée sur la surface (136) d'entrée dudit au moins un dernier élément (138) optique, ou étant positionnée entre ledit au moins un élément (130) optique et le plan (110) de sortie de système optique ; et dans lequel tous les éléments optiques dudit au moins un élément (130) optique sont placés au moins en partie sur le trajet du faisceau optique entre la source (140) optique et le détecteur (150) de lumière.

2. Système (100) optique selon la revendication 1, comprenant en outre :
au moins un élément (160) optique supplémentaire qui est aménagé entre la source (140) optique et le détecteur (150) de lumière.

3. Système (100) optique selon la revendication 2, dans lequel ledit au moins un élément (160) optique supplémentaire comprend en outre :
un filtre (165) qui filtre au moins une partie de l'intervalle (410) prédéterminé de longueurs d'onde de la lumière (145).

4. Système (100) optique selon la revendication 2, dans lequel le faisceau (125) laser possède un intervalle (430) de longueurs d'onde de faisceau laser qui ne parvient pas à chevaucher l'intervalle (420) prédéterminé de sensibilité aux longueurs d'onde du détecteur (150) de lumière.

5. Système (100) optique selon la revendication 4, dans lequel l'intervalle (430) de longueurs d'onde de faisceau laser ne parvient pas à chevaucher l'intervalle (410) prédéterminé de longueurs d'onde de la lumière (145), et dans lequel ledit au moins un élément (130) optique comprend un miroir (170a) sélectif en longueurs d'onde qui réfléchit ladite au moins une partie (147) de la lumière (145) et qui est transparent pour le faisceau (125) laser.

6. Système (100) optique selon la revendication 4, dans lequel ledit au moins un élément (130) optique comprend un miroir (170b) sélectif en polarisation qui réfléchit ladite au moins une partie (147) de la lumière (145) qui présente une polarisation différente de celle du faisceau (125) laser.

7. Système (100) optique selon l'une quelconque des revendications 5 ou 6, dans lequel ladite au moins une partie de la lumière (145) traverse ledit au moins un élément (130) optique depuis la source (140) optique jusqu'au détecteur (150) de lumière.

8. Système (100) optique selon l'une quelconque des revendications précédentes, dans lequel la source (140) optique comprend en outre :
un matériau luminescent qui génère un spectre (300) prédéterminé de la lumière (145) avec des longueurs d'onde (310) prédéterminées discrètes et des amplitudes (320) prédéterminées associées.

9. Système (100) optique selon la revendication 8, dans lequel le matériau luminescent comprend au moins l'une parmi une substance fluorescente ou une substance phosphorescente.

10. Système (100) optique selon l'une quelconque des revendications 8 ou 9, dans lequel le matériau luminescent est choisi sur la base d'une configuration dudit au moins un élément (130) optique, dans lequel le détecteur (150) de lumière est apte à associer le spectre (300) prédéterminé de la lumière (145) avec la configuration dudit au moins un élément (130) optique, et dans lequel le détecteur (150) de lumière est en outre apte à détecter une altération de la configuration dudit au moins un élément (130) optique en réponse à la détection d'un changement dans le spectre (300) de la lumière (145).

11. Système (100) optique selon la revendication 10, dans lequel le détecteur (150) de lumière est en outre apte à détecter les longueurs d'onde (310) prédéterminées discrètes et les amplitudes (320) prédéterminées associées, pour associer les longueurs d'onde (310) prédéterminées discrètes et les amplitudes (320) prédéterminées associées de la configuration dudit au moins un élément (130) optique, et pour ajuster automatiquement la puissance du laser (120) sur la base de la détection d'un changement prédéterminé dans les longueurs d'onde (310) prédéterminées discrètes et/ou d'un changement prédéterminé dans les amplitudes (320) prédéterminées associées.

12. Système (100) optique selon l'une quelconque des revendications précédentes, comprenant en outre :
au moins un laser (120) supplémentaire qui émet un faisceau (125) laser supplémentaire, dans lequel le détecteur (150) de lumière commande l'interruption du laser (120) supplémentaire si le détecteur (150) de lumière ne parvient pas à recevoir ladite au moins une partie (147) de la lumière (145) provenant de la source (140) optique ou détecte que l'intensité de ladite au moins une partie (147) de la lumière (145) reçue depuis la source (140) optique se trouve en dehors d'un intervalle prédéterminé d'intensité.

13. Système (100) optique selon la revendication 12, dans lequel le faisceau (125) laser supplémentaire contribue à l'excitation de la source (140) optique pour générer la lumière (145).

14. Procédé (600) de fonctionnement d'un système (100) optique selon l'une quelconque des revendications précédentes, le système (100) optique comprenant un plan (110) de sortie de système optique, un laser (120), au moins un élément (130) optique, une source (140) optique, et un détecteur (150) de lumière, le procédé prévoyant de :
générer (610) un faisceau (125) laser avec le laser (120) ;
utiliser (620) ledit au moins un élément (130) optique pour former un faisceau (105) optique à partir du faisceau (125) laser ;
exposer (630) la source (140) optique à au moins une partie du faisceau (105) optique ou à au moins une partie du faisceau (125) laser ;
exciter (640) un matériau luminescent dans la source (140) optique avec ladite au moins une partie du faisceau (105) optique ou avec ladite au moins une partie du faisceau (125) laser pour générer une lumière (145) ayant un spectre (300) prédéterminé ;
recevoir (650) au moins une partie de la lumière (145) avec le détecteur (150) de lumière ;
utiliser (660) le détecteur (150) de lumière afin de détecter une absence de réception de ladite au moins une partie (147) de la lumière (145) ou de détecter qu'une intensité de ladite au moins une partie (147) de la lumière (145) reçue depuis la source (140) optique se trouve en dehors d'un intervalle prédéterminé d'intensité, ou de détecter qu'une intensité de ladite au moins une partie du spectre (300) prédéterminé se trouve en dehors d'un intervalle prédéterminé d'intensité ; et
commander (670) l'interruption du laser (120) en réponse à la détection par le détecteur (150) de lumière de l'absence de réception de ladite au moins une partie (147) de la lumière (145) ou en réponse à la détection par le détecteur (150) de lumière que l'intensité de ladite au moins une partie (147) de la lumière (145) reçue depuis la source (140) optique se trouve en dehors d'un intervalle prédéterminé d'intensité, ou en réponse à la détection par le détecteur (150) de lumière que l'intensité de ladite au moins une partie du spectre (300) prédéterminé se trouve en dehors d'un intervalle prédéterminé d'intensité.
